# EUROPÄISCHE PATENTANMELDUNG

(11) **EP 1 429 039 A1**
(43) Veröffentlichungstag der Anmeldung: **16.06.2004**
(21) Anmeldenummer: 03025143.3
(22) Anmeldetag: 03.11.2003
(51) Int. Cl.: F16B 4/00, F16B 35/04

(54) **Presspassverbindungselement und Verfahren zu dessen Herstellung**

(30) Priorität: 10.12.2002 DE 10258149
(71) Anmelder: Kamax-Werke Rudolf Kellermann GmbH & Co. KG, 37520 Osterode am Harz (DE)
(72) Erfinder: Sommer, Wolfgang, 35285 Gemünden (Wohra) (DE); Wagner, Frank, 35418 Grossen Buseck (DE)
(74) Vertreter: Patentanwälte Rehberg + Hüppe

(57) **Zusammenfassung**

Ein Presspassverbindungselement (1), insbesondere ein Radbolzen (18), besitzt einen Schaft (2), einen an den Schaft (2) anschließenden Kopf (3) und einen am Schaft (2) vorgesehenen Presspassabschnitt (4) mit einem mehrgängigen Wendelprofil (5) mit einem Einlaufbereich (6). Der Presspassabschnitt (4) besitzt zusätzlich zu dem Einlaufbereich (6) einen Anstiegsbereich (8), in dem der Außendurchmesser des Presspassabschnitts (4) in Richtung auf den Kopf (3) hin bis zu einem maximalen Außendurchmesser ansteigt, wobei der maximale Außendurchmesser des Anstiegsbereichs (8) des Presspassabschnitts (4) beabstandet zu dem Kopf (3) angeordnet ist. Ein neues Verfahren zum Herstellen des neuen Presspassverbindungselements weist folgende Schritte auf: Kaltumformen des Presspassabschnitts zum Erzeugen eines zylindrischen, mehrgängigen Wendelprofils, und spanloses Kalibrieren des Wendelprofils zum Erzeugen des Anstiegsbereichs.

## Beschreibung

Die Erfindung betrifft ein Presspassverbindungselement mit einem Schaft, einem an den Schaft anschließenden Kopf und einem am Schaft vorgesehenen Presspassabschnitt mit einem mehrgängigen Wendelprofil mit einem Einlaufbereich.

Derartige Presspassverbindungselemente dienen in Kombination mit einer in einem Bauteil angeordneten korrespondierenden Bohrung zum Herstellen einer Presspassverbindung. Unabhängig von der im konkreten Einzelfall vorliegenden Toleranzpaarung der Presspassverbindung besitzt der Außendurchmesser des Presspassabschnitts im Vergleich zum Innendurchmesser der Bohrung stets ein gewisses Übermaß, aus dem sich der gewünschte sichere Reibschluss ergibt.

### STAND DER TECHNIK

Ein Presspassverbindungselement, insbesondere ein Radbolzen, ist aus der ***DE 43 18 494 C1*** bekannt. Das Presspassverbindungselement weist einen Schaft, einen an den Schaft anschließenden Kopf und einen am Schaft vorgesehenen Presspassabschnitt mit einem mehrgängigen Wendelprofil auf. Das Wendelprofil besitzt, wie auch jedes Gewinde, einen Einlaufbereich und einen Auslaufbereich. Das Wendelprofil weist mehrere Gewindegänge mit entsprechender Steigung auf. Mit dem bekannten Presspassverbindungselement lässt sich die gewünschte Presspassverbindung sicher herstellen, wenn die korrespondierende Bohrung im Bauteil mit einer relativ kleinen Toleranz gefertigt wurde. Bei den vorliegenden Bohrungen ist unter einer derartigen kleinen Toleranz eine Toleranz im Bereich von etwa IT 7 oder weniger gemäß der ISO-Toleranzreihe zu verstehen. Eine derart genaue Fertigung des Durchmessers der Bohrung erfordert eine sich an das eigentliche Bohren der Bohrung anschließende Nachbearbeitung der inneren Oberfläche, z. B. durch Reiben. Dieser zweite zusätzliche Bearbeitungsgang erhöht verständlicherweise die Fertigungskosten für die Herstellung des Bauteils und damit der Elemente der Presspassverbindung.

Das bekannte Presspassverbindungselement wird stets in Verbindung mit einer nachbearbeiteten Bohrung im Bauteil eingesetzt. Theoretisch könnte auf eine Nachbearbeitung der Bohrung verzichtet werden oder die Bohrung könnte aus anderen Gründen eine relativ große Toleranz besitzen. Eine derartige nicht nachbearbeitete Bohrung besitzt dann eine Toleranz im Bereich von IT 10 bis IT 12. Dies bedeutet, dass die Differenz der Beträge der Innendurchmesser der größten innerhalb des Toleranzfelds gefertigten Bohrung und der kleinsten innerhalb des Toleranzfelds gefertigten Bohrung relativ groß ist. Wenn nun das bekannte Presspassverbindungselement in eine solche Bohrung im Bauteil mit einem vergleichsweise großen Innendurchmesser eingepresst würde, reichte die Überdeckung und die daraus resultierende Reibung nicht aus, um den Presspasssitz sicher zu gewährleisten. Es bestünde die Gefahr, dass sich das Presspassverbindungselement ungewollt aus der Bohrung löst. Wenn hingegen das bekannte Presspassverbindungselement in eine solche Bohrung mit einem vergleichsweise kleinen Innendurchmesser eingepresst würde, käme es notwendigerweise zu starken elastisch-plastischen Verformungen sowohl des Presspassabschnitts des Presspassverbindungselements als auch der Bohrung des Bauteils. Dadurch entstehen unerwünschte Spannungen im Bauteil und im Presspassverbindungselement Das Presspassverbindungselement und/oder das mit der korrespondierenden Bohrung versehene Bauteil können nach dem erstmaligen Lösen der Presspassverbindung praktisch nicht zur erneuten Herstellung einer sicheren Presspassverbindung wiederverwendet werden.

### AUFGABE DER ERFINDUNG

Der Erfindung liegt die Aufgabe zugrunde, ein Presspassverbindungselement bereitzustellen, das bei guter Sicherungswirkung und Wiederverwendbarkeit auch in eine mit einer relativ großen Toleranz bearbeitete Bohrung eingepresst werden kann.

### LÖSUNG

Die Aufgabe der Erfindung wird erfindungsgemäß durch ein Presspassverbindungselement mit den Merkmalen des unabhängigen Patentanspruchs 1 und durch ein Verfahren zum Herstellen eines Presspassverbindungselements mit den Merkmalen des unabhängigen Patentanspruchs 12 gelöst.

### WEITERER STAND DER TECHNIK

Ferner ist aus dem ***Prospekt der Anmelderin "Radbolzen. Für PKW und Nutzfahrzeuge; KAMAX verbindet weltweit" (Ausgabe 2000)*** ein Radbolzen mit axialem Rändel bekannt. Der Rändelradbolzen kann zum Herstellen einer Presspassverbindung mit einer mit einer relativ großen Toleranz bearbeiteten korrespondierenden Bohrung einer Nabe eingesetzt werden. Der axiale Rändelradbolzen besitzt anstelle eine Wendelprofils im Presspassabschnitt einen gerändelten Presspassabschnitt mit sich axial erstreckenden Rändeln, d. h. mit einer Vielzahl benachbarter, sich parallel zueinander erstreckender Rippen und Nuten. Wenn ein derartiger axialer Rändelradbolzen in eine Bohrung mit relativ kleinem Innendurchmesser einer aus einem vergleichsweise weicheren Material hergestellte Nabe axial eingepresst wird, kommt es zu starken elastisch-plastischen Verformungen im Bereich der inneren Oberfläche der Bohrung des Bauteils. Aufgrund der axialen Ausrichtung der Rippen resultiert dies darin, dass die innere Oberfläche der Bohrung ebenfalls "gerändelt" wird. Wenn der bekannte axiale Rändelradbolzen hingegen in eine relativ kleine Bohrung einer aus einem vergleichsweise härteren Material hergestellten Nabe eingepresst wird, kommt es zu Abschererscheinungen im Bereich der Spitzen der Rippen des Rändels. In beiden zuvor erläuterten Fällen sind die erheblichen elastisch-plastischen Verformungen die Ursache dafür, dass die Wiederverwendbarkeit des Presspassverbindungselements und/oder des Bauteils - d. h. ein Entfernen des Presspassverbindungselements und ein späteres Wiedereinpressen - nicht mehr gegeben ist.

Ein Verbindungselement zum Verbinden von zwei Bauteilen unter Vorspannung ist aus der ***US 3,418,012*** bekannt. Das bekannte Verbindungselement besitzt einen kegelförmigen Schmiedebereich ("*tapered swaging portion*") mit darin angeordneten, sich im Wesentlichen axial erstreckenden Kanälen und Rippen. Im Gegensatz zu einem Gewinde bzw. Wendelprofil sind die Kanäle und Rippen entweder genau axial, d. h. mit einer Steigung von 90°, oder mit einer geringfügig kleineren Steigung angeordnet. Das Verbindungselement wird in zwei miteinander fluchtende Bohrungen in den zwei übereinander angeordneten Bauteilen eingebracht. Die Bohrungen wurden dafür zuvor gemeinsam derart in die beiden Bauteile eingebracht, dass der Durchmesser der zylindrischen Bohrung etwa zwischen 25 µm [1/1000 inch] bis 30 µm [12/1000 inch] kleiner ist als der unmittelbar unterhalb des Kopfes angeordnete maximale Durchmesser des Schafts des Verbindungselements. Das Verbindungselement wird unter Rotation in die Bohrung eingebracht. Hierdurch kommt es zu einer elastisch-plastischen Verformung der zunächst zylindrischen Bohrung, die aufgrund der kegelstumpfförmigen Geometrie des Schafts des Verbindungselements ebenfalls eine konische Ausbildung erhält.

Presspassverbindungselemente mit einem Schaft, einem an den Schaft anschließenden Kopf und einem an dem Schaft vorgesehenen Presspassabschnitt mit einem Rändel sind aus der *GB 891,807* und der *US 3*,*252*,*495* bekannt. Das Rändel besteht aus beabstandeten, parallelen, um die Schraubenachse umlaufenden Rändelabschnitten. Die Rändelabschnitte weisen Rändelelemente auf, die sich im Wesentlichen in Richtung der Schraubenachse erstrecken. Vorzugsweise sind die Rändelelemente um einen Winkel von etwa 10° gegenüber der Schraubenachse geneigt angeordnet, um eine Rotation des Presspassverbindungselements beim Einbringen in eine korrespondierende Bohrung zu gewährleisten.

### BESCHREIBUNG DER ERFINDUNG

Das neue Presspassverbindungselement besitzt einen Schaft, einen an den Schaft anschließenden Kopf und einen am Schaft vorgesehenen Presspassabschnitt mit einem mehrgängigen Wendelprofil mit einem Einlaufbereich. Der Presspassabschnitt besitzt zusätzlich zu dem Einlaufbereich einen Anstiegsbereich, in dem der Außendurchmesser des Presspassabschnitts in Richtung auf den Kopf hin bis zu einem maximalen Außendurchmesser ansteigt, wobei der maximale Außendurchmesser des Anstiegsbereichs des Presspassabschnitts beabstandet zu dem Kopf angeordnet ist.

Mit dem neuen Presspassverbindungselement können Presspassverbindungen - beispielsweise zwischen Radbolzen und der Nabe eines Pkw oder Lkw - auch bei relativ großen Toleranzen der Bohrungen in der Nabe sicher und verlässlich hergestellt werden.

Wenn eine genaue Fertigung des Innendurchmessers der Bohrung zur Erreichung einer Toleranz im Bereich von IT 6 bis IT 8 - häufig IT 7 - z. B. mittels Reiben nicht möglich oder nicht gewünscht ist, besitzt die Bohrung nach dem eigentlichen Bohren eine Toleranz im Bereich von IT 10 bis IT 12 - häufig IT 11. Dies bedeutet, dass die Differenz der Beträge der Innendurchmesser der größten innerhalb des Toleranzfelds gefertigten Bohrung und der kleinsten innerhalb des Toleranzfelds gefertigten Bohrung relativ groß ist. Wenn nun das erfindungsgemäße Presspassverbindungselement in eine solche Bohrung mit einem vergleichsweise großen Innendurchmesser eingepresst wird, reicht zumindest die Überdeckung im Bereich des maximalen Außendurchmessers des Presspassabschnitts des Presspassverbindungselements aus, um die notwendige Reibung zur Erreichung des gewünschten Presspasssitzes sicher zu gewährleisten. Es besteht keine Gefahr, dass sich das Presspassverbindungselement ungewollt aus der Bohrung löst. Wenn hingegen das erfindungsgemäße Presspassverbindungselement in eine Bohrung mit einem vergleichsweise kleinen Innendurchmesser eingepresst wird, kommt es im Anstiegsbereich des Presspassabschnitts - d. h. einem Bereich mit einem zum Kopf hin ansteigenden Außendurchmesser, der jedoch kleiner als der maximale Außendurchmesser des Presspassabschnitts ist - zu keinen oder zumindest zu geringeren elastisch-plastischen Verformungen als im Bereich des maximale Außendurchmessers des Presspassabschnitts. Das Auftreten unerwünschter Spannungen im Bauteil und im Presspassverbindungselement wird reduziert, und das Presspassverbindungselement und das mit der korrespondierenden Bohrung versehene Bauteil können nach dem erstmaligen Lösen der Presspassverbindung zur erneuten Herstellung einer sicheren Presspassverbindung wiederverwendet werden. Der Anstiegsbereich des Presspassabschnitts endet beabstandet zu dem Kopf des Verbindungselements, um das Auftreten unerwünschter Spannungen in Kopfnähe und mögliche damit einhergehende Setzkraftverluste zu verhindern.

Gemäß der Definition der Erfindung ist der Anstiegsbereich des Presspassabschnitts von dem bei jedem Wendelprofil vorhandenen Einlaufbereich zu unterscheiden. Bei einem Wendel handelt es sich bekanntlich um eine durchgehende, sich um die Schraubenachse windende Vertiefung mit zwischen den einzelnen Windungen der Vertiefung vorgesehenen, sich ebenfalls schraubenförmig um die Schraubenachse erstreckenden Vorsprüngen. Unter dem Einlaufbereich des Wendelprofils ist der Übergangsbereich zwischen dem Teil des Schafts, in dem kein Wendelprofil vorhanden ist, und dem Teil des Schafts, in dem sich das Wendelprofil weiter fortsetzt, zu verstehen. In diesem Bereich tritt fertigungstechnisch bedingt ein geringfügiger Anstieg des Außendurchmessers auf. Bei üblichen Wendelprofilen gemäß dem Stand der Technik setzt sich dieser Anstieg des Außendurchmessers jedoch nicht fort. Der bekannte Presspassabschnitt weist mit Ausnahme der beiden Bereiche über die axiale Länge durchgehend einen konstanten Kerndurchmesser und einen konstanten Außendurchmesser auf. Im Gegensatz hierzu besitzt der erfindungsgemäße Presspassabschnitt bzw. das darin angeordnete Wendelprofil zumindest auch außerhalb des Einlaufbereichs den Anstiegsbereich mit sich vergrößerndem Außendurchmesser. Es ist dabei bevorzugt, dass der Kerndurchmesser des Wendelprofils konstant ist.

Zusätzlich zu dem mindestens einen Anstiegsbereich, in dem sich der Außendurchmesser definitionsgemäß auf den maximalen Durchmesser vergrößert, kann eine Vielzahl von weiteren Bereichen im Presspassabschnitt vorgesehen sein, wobei die Bereiche z. B. unterschiedliche Steigungen bezüglich ihres Außendurchmessers aufweisen oder durch zylindrische Ergänzungsbereiche miteinander verbunden sein können. All diese unterschiedlichen Ausführungsformen haben jedoch gemein, dass zumindest ein Anstiegsbereich vorhanden ist, in dem sich der Außendurchmesser des Presspassabschnitts bis zur Erreichung des maximalen Außendurchmessers vergrößert. Definitionsgemäß endet der Anstiegsbereich an dieser Stelle. Wenn sich daran ein zylindrischer Bereich mit dem maximalen Außendurchmesser anschließt, so wird dieser als Ergänzungsbereich bezeichnet. Je nach weiterer Ausgestaltung kann sich dieser Ergänzungsbereich dann über einen mehr oder weniger großen axialen Anteil des Presspassabschnitts erstrecken. Eine weitere Möglichkeit besteht darin, dass auch mehrere Anstiegsbereiche - axial beabstandet zueinander - vorgesehen sein können, die durch Abstiegsbereiche voneinander getrennt sind. Dabei können z. B. zwei Klemmstellen oder Klemmbereiche gebildet sein, die eine zusätzliche Ausrichtwirkung für das Presspassverbindungselement im Bauteil erbringen.

Der Presspassabschnitt kann zusätzlich zu dem Anstiegsbereich mindestens einen Abstiegsbereich besitzen, in dem der Außendurchmesser des Presspassabschnitts in Richtung auf den Kopf hin abnimmt. Dabei kann der Abstiegsbereich insbesondere spiegelsymmetrisch zum Anstiegsbereich ausgebildet sein, was insbesondere fertigungstechnische Vorteile mit sich bringt, weil damit insbesondere beim Walzen das Entstehen resultierender axialer Kräfte auf das Presspassverbindungselement vermieden wird. Neben diesen fertigungstechnischen Vorteilen resultieren aus einer derartigen Ausführung Vorteile in der Spannungsverteilung im Bereich der Bauteilbohrung. Die Materialbeanspruchung wird in den kritischen Randzonen des Bauteils reduziert.

Der Presspassabschnitt kann eine tonnenförmige Gestalt besitzen. Eine derartige tonnenförmige Gestalt kann besonders gut durch Walzen hergestellt werden. Bei einer tonnenförmigen oder auch balligen Außenkontur des Wendelprofils bzw. des Presspassverbindungsabschnitts existiert zumindest theoretisch lediglich eine Stelle oder auch ein kleiner, sich axial erstreckender Bereich mit dem maximalen Außendurchmesser. Die benachbarten Punkte in beiden axialen Richtungen weisen jedoch aufgrund der relativ geringen Steigung und der auftretenden Verformungen beim Einführen des Presspassverbindungselements in eine Bohrung praktisch ebenfalls den maximalen Außendurchmesser auf. Somit wird sichergestellt, dass ein ausreichender axialer Bereich für die gewünschte Überdeckung zur Verfügung steht. Der Presspassabschnitt kann dabei so ausgebildet sein, dass das gesamte Wendelprofil zur Herstellung einer Presspassverbindung dient. Es ist jedoch auch möglich, dass ein Teil des Wendelprofils eine Unterdeckung gegenüber dem Innendurchmesser der Bohrung besitzt - d. h. eine Spielpassung oder auch Übergangspassung bildet - und erst ein darauf in Richtung des ansteigenden Außendurchmessers folgender Teil des Wendelprofils das notwendige Übermaß besitzt, um die gewünschte Presspassung bereitzustellen. Bezüglich der Einpresskräfte und Auspresskräfte liegt aufgrund der tonnenförmigen Geometrie eine geringere Streuung vor.

Im Anschluss an den Anstiegsbereich in Richtung auf den Kopf kann ein zylindrischer Ergänzungsbereich vorgesehen sein, der den maximalen Außendurchmesser aufweist. Anstelle der zuvor beschriebenen tonnenförmigen Ausbildung kann also auch ein zylindrischer Ergänzungsbereich zusätzlich zum Anstiegbereich vorgesehen sein. Dieser Ergänzungsbereich besitzt dann eine gewisse axiale Erstreckung, so dass der Anstiegsbereich beabstandet zu dem Kopf des Verbindungselements endet. Der zylindrische Ergänzungsbereich endet ebenfalls beabstandet zu dem Kopf des Verbindungselements, um das Auftreten unerwünschter Beanspruchungen zu vermeiden. In dieser Weise wird sichergestellt, dass der Bereich des maximalen Durchmessers - d. h. dessen axiale Erstreckung - ausreichend ist, um den gewünschten festen Presspasssitz zu erzielen.

Der zylindrische Ergänzungsbereich kann zwischen dem Anstiegsbereich und dem Abstiegsbereich des Presspassabschnitts vorgesehen sein. Mit dieser Ausgestaltung kann ein spiegelsymmetrischer Verlauf erzielt werden, was wiederum positiven Einfluss auf die Fertigung des Verbindungselements hat.

Das Wendelprofil kann mindestens sechsgängig ausgebildet sein. Der Steigungswinkel des Wendelprofils kann insbesondere zwischen 5° und 30° betragen. Je nach Ausgestaltung des Wendelprofils und des Presspassabschnitts können auch noch deutlich mehr Gänge vorhanden sein, z. B. bis zu 18 Gänge. Der Steigungswinkel beträgt bevorzugt zwischen 9° und 11°. Unter dem Steigungswinkel ist der Winkel zwischen einer gedachten, senkrecht zur Achse des Verbindungselements verlaufenden Linie und den Wendeln zu verstehen. Die Auswahl des Steigungswinkels in einem Bereich von zwischen 5° und 30° - bevorzugt zwischen 9° und 11 ° - hat den Vorteil, dass durch die äußeren Oberflächen der Wendel verdrängtes Material der inneren Oberfläche der Bohrung weniger stark elastisch-plastisch verformt wird, als dies bei größeren und kleineren Winkeln der Fall ist. So kann man sich vorstellen, dass bei Verwendung eines Wendelprofils mit einem sehr großen Steigungswinkel oder gar bei Verwendung eines axialen Rändelprofils ("Steigungswinkel" = 90°) das Material der Bohrung beim axialen Einpressen des Presspassverbindungselements entlang seiner gesamten axialen Erstreckung elastisch-plastisch verformt wird. Die Bohrung wird ebenfalls "gerändelt", da das Material der Bohrungswandung nicht elastisch in axialer Richtung ausweichen kann, sondern radial elastisch-plastisch in benachbarte Vertiefungen einfließt. Bei kleineren Steigungswinkeln im Stand der Technik - z. B. von etwa 3° bei einem dreigängigen Wendelprofil - tritt der Effekt des Abscherens der Außenoberfläche des Wendelprofils verstärkt auf. Insgesamt kommt es dabei zu größeren elastisch-plastischen Verformungen als bei den erfindungsgemäßen Steigungswinkeln. Die stärkere axiale Ausrichtung des Wendelprofils bedingt geringere resultierende Reibkräfte. Im Vergleich zu einem dreigängigen Wendelprofil und identischen maßlichen Überdeckungen werden die erforderlichen Einpresskräfte reduziert.

An dem dem Kopf abgewandten Ende des Schaftes kann ein Gewindeabschnitt mit einem Gewinde mit einem Flankendurchmesser vorgesehen sein. Das Wendelprofil kann einen Kerndurchmesser besitzen, der größer oder gleich dem Flankendurchmesser des Gewindes ist. Aufgrund dieser Ausbildung besitzt das Wendelprofil einen Spannungsquerschnitt, der bevorzugt etwa 15 % oder mehr größer ist als der Spannungsquerschnitt des Gewindes. Das Wendelprofil besitzt eine deutlich geringere Profilhöhe als bei einem normalen Gewinde. Der vergleichsweise vergrößerte Spannungsquerschnitt resultiert darin, dass bei einer Überdehnung des Presspassverbindungselements durch zu starkes Anziehen einer an dem Gewinde des Gewindeabschnitts angreifenden Mutter oder dergleichen (zumindest zunächst) lediglich eine Längung und eine entsprechende Einschnürung des Gewindes und nicht des Presspassabschnitts erfolgt. Hierdurch wird der sichere Reibschluss des Presspassabschnitts auch bei Aufbringung zu großer Anzugsmomente sichergestellt.

An dem dem Kopf abgewandten Ende des Presspassabschnitts und anschließend an den Einlaufbereich des Wendelprofils kann ein Zentrierabschnitt vorgesehen sein, dessen Außendurchmesser größer als der Außendurchmesser des Gewindes und vorzugsweise kleiner als der minimale Außendurchmesser des Wendelprofils im Einlaufbereich ist. Der Zentrierabschnitt dient zum Vereinfachen des axialen Einführens des Presspassverbindungselements in die korrespondierende Bohrung in dem Bauteil. Vorzugsweise besitzt dieser Zentrierabschnitt eine kegelstumpfförmige Gestalt, wodurch beim Einführen des Zentrierabschnitts in die Bohrung des Bauteils die gewünschte Zentrierwirkung sicher erreicht wird. Der Zentrieransatz besitzt vorzugsweise kein Profil und kann einen Außendurchmesser aufweisen, der etwa dem Flankendurchmesser des Gewindes entspricht.

Der Zentrierabschnitt kann eine axiale Länge besitzen, die zwischen 10 % und 50 %, vorzugsweise 25 %, des maximalen Außendurchmessers des Presspassabschnitts entspricht. Diese Dimensionierung stellt sicher, dass ein unerwünschtes schräges Einführen des Presspassverbindungselements in die Bohrung vermieden wird.

Das Presspassverbindungselement kann ein Radbolzen sein. Derartige Radbolzen werden dazu verwendet, die Nabe eines PKW oder LKW mit der Felge eines Rades zu verbinden. Hierfür wird der Radbolzen mittels der Presspassverbindung mit der Nabe verbunden. Nach der Montage des Rades wird schließlich eine Mutter auf das endseitig angeordnete Gewinde des Radbolzens aufgeschraubt. Es versteht sich, dass das erfindungsgemäße Presspassverbindungselement jedoch auch zur Herstellung sämtlicher anderer Presspassverbindungen Verwendung finden kann.

Die Überdeckung der Presspassung beträgt minimal etwa 0,25 % und maximal etwa 1,1 %, woraus sich ein Überdeckungsfenster von etwa 0,85 % ergibt. Im Stand der Technik (DE 43 18 494 C1, Seite 4, Zeile 36-38) waren bisher bei Wendelprofilen Überdeckungen im Bereich von 0,3 bis 0,7 % bekannt. Daraus resultiert ein Überdeckungsfenster von 0,4 %. Mit dem neuen Verfahren kann ein größeres Überdeckungsfenster genutzt werden, wodurch die Kosten für die Herstellung der neuen Presspassverbindung reduziert werden.

Das neue Verfahren zum Herstellen eines Presspassverbindungselements mit einem Schaft und einem Kopf weist folgende Schritte auf: Kaltumformen eines am Schaft des Presspassverbindungselements vorgesehenen Presspassabschnitts zum Erzeugen eines zylindrischen, mehrgängigen Wendelprofils, und spanloses Kalibrieren des Wendelprofils zum Erzeugen eines Anstiegsbereichs, in dem der Außendurchmesser des Presspassabschnitts in Richtung auf den Kopf hin bis zu einem maximalen Außendurchmesser derart ansteigt, dass der maximale Außendurchmesser des Anstiegsbereichs des Presspassabschnitts beabstandet zu dem Kopf angeordnet ist. Das spanlose Kalibrieren kann insbesondere durch Walzen oder durch Schäften erfolgen. Damit lässt sich vorteilhaft ein hoher Flächentraganteil des Wendelprofils erzeugen.

Das Wendelprofil weist vorzugsweise einen Flächentraganteil von mindestens etwa 30 % auf. Der Flächentraganteil kann zwischen etwa 30 % und 80 %, vorzugsweise zwischen 40 % und 70 %, bevorzugt bei etwa 50-60 % liegen. Bei dem Flächentraganteil handelt es sich um die Fläche am Außendurchmesser des Wendelprofils, die nach Beendigung des Einpressvorgangs des Presspassabschnitts in die korrespondierende Bohrung Kontakt zu der Innenwandung der Bohrung aufweist. Die prozentuale Angabe des Flächentraganteils ist auf die zylindrische Mantelfläche der Bohrung bezogen, wobei gedanklich vorausgesetzt wird, dass die Bohrung und der Presspassabschnitt in ihrer axialen Länge übereinstimmen.

Der Kerndurchmesser des Wendelprofils bleibt auch während des Kalibrierens des Wendelprofils im Anstiegsbereich etwa konstant. Der Außendurchmesser des Wendelprofils wird bevorzugt derart genau kalibriert, dass er in einem sehr genauen Toleranzbereich von IT 7 liegt. Hierdurch werden die Anforderungen an die Toleranz der korrespondierenden Bohrung im Bauteil reduziert.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste beispielhafte Ausführungsform des neuen Verbindungselements vor dem Herstellen einer Presspassverbindung.
- **Fig. 2**: zeigt eine zweite beispielhafte Ausführungsform des neuen Verbindungselements.
- **Fig. 3**: zeigt eine Detailansicht des Verbindungselements gemäß Fig. 2.
- **Fig. 4**: zeigt eine Detailansicht ähnlich Fig. 3 einer weiteren Ausführungsform des neuen Verbindungselements.
- **Fig. 5**: zeigt eine dritte beispielhafte Ausführungsform des neuen Verbindungselements.
- **Fig. 6**: zeigt eine Detailansicht des Verbindungselements gemäß Fig. 5.
- **Fig. 7**: zeigt eine Detailansicht einer weiteren Ausführungsform des neuen Verbindungselements.
- **Fig. 8**: zeigt das Verbindungselement gemäß Fig. 1 in der montierten Stellung.
- **Fig. 9**: zeigt eine Detailansicht aus Fig. 8.
- **Fig. 10**: zeigt eine Querschnittsansicht gemäß A-A aus Fig. 8.
- **Fig. 11**: zeigt eine weitere Ausführungsform des neuen Verbindungselements.
- **Fig. 12**: zeigt eine Profilabwicklung des Wendelprofils des neuen Verbindungselements.
- **Fig. 13**: zeigt eine Übersichtsdarstellung des neuen Verbindungselements in zwei montierten Stellungen.

### FIGURENBESCHREIBUNG

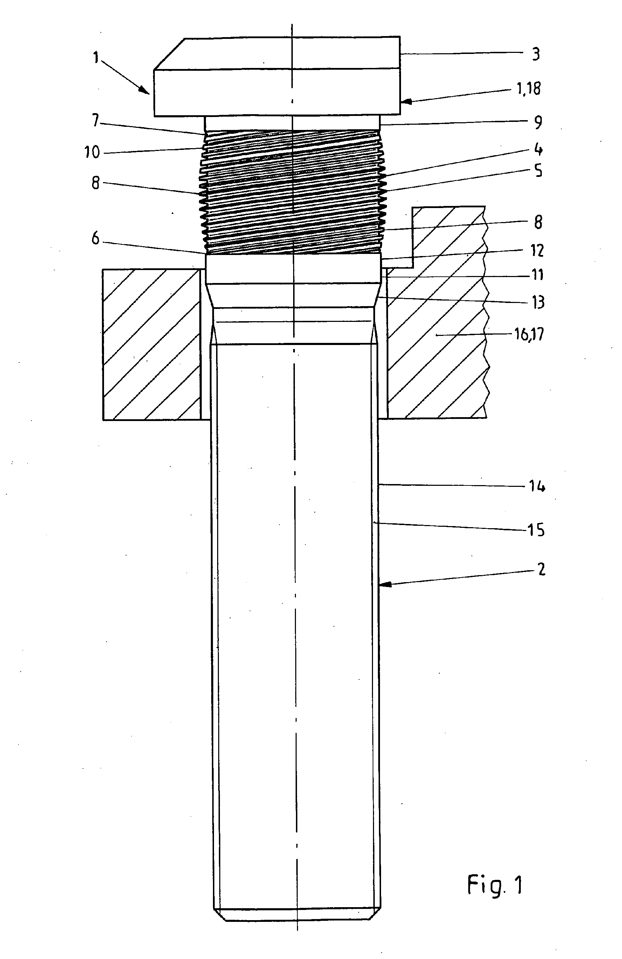

**Fig. 1** zeigt eine erste Ausführungsform des neuen Presspassverbindungselements 1. Das Presspassverbindungselement 1 besitzt einen Schaft 2 sowie einen an den Schaft 2 anschließenden Kopf 3. An dem Schaft 2 ist ferner ein Presspassabschnitt 4 mit einem mehrgängigen Wendelprofil 5 vorgesehen. Bei dem in Fig. 1 dargestellten beispielhaften Wendelprofil 5 handelt es sich um ein sechsgängiges Wendelprofil 5. Das Wendelprofil 5 könnte jedoch auch mehr Gänge aufweisen - beispielsweise bis zu 18 Gänge. Das Wendelprofil besitzt einen Einlaufbereich 6 und einen Auslaufbereich 7. Der Presspassabschnitt 4 weist zusätzlich zu dem Einlaufbereich 6 einen Anstiegsbereich 8 auf, in dem der Außendurchmesser des Presspassabschnitts 4 in Richtung auf den Kopf 3 hin bis zu einem maximalen Außendurchmesser ansteigt. Die Steigung des Anstiegsbereichs 8 ist aus Übersichtlichkeitsgründen stark übertrieben dargestellt. In Wirklichkeit ist die Differenz zwischen dem maximalen Außendurchmesser des Wendelprofils 5 und dem minimalen Außendurchmesser des Wendelprofils 5 sehr viel kleiner. Sie liegt z. B. in einer Größenordnung von 5/100 mm. Der Kerndurchmesser des Wendelprofils 5 hingegen ist etwa konstant über die Länge des Wendelprofils 5. Der maximale Außendurchmesser des Anstiegsbereichs 8 des Presspassabschnitts 4 ist beabstandet zu dem Kopf 3 angeordnet. Zwischen dem Auslaufbereich 7 des Wendelprofils 5 und der Unterseite des Kopfes 3 ist ein Abstandsbereich 9 vorgesehen. Zusätzlich zu dem Anstiegsbereich 8 weist der Presspassabschnitt 4 einen Abstiegsbereich 10 auf, in dem der Außendurchmesser des Presspassabschnitts 4 in Richtung auf den Kopf 3 hin sinkt. Der Presspassabschnitt 4 besitzt insgesamt eine leicht tonnenförmige oder ballige Gestalt.

Im Anschluss an den Einlaufbereich 6 des Wendelprofils 5 in Richtung weg von dem Kopf 3 ist ein Zentrierabschnitt 11 vorgesehen. Im vorliegenden Fall besitzt der Zentrierabschnitt 11 einen zylindrischen Teil 12. Ein weiterer kegelstumpfförmiger Teil 13 schließt sich an den Zentrierabschnitt 11 an. Er ist definitionsgemäß nicht Teil des Zentrierabschnitts 11. Der Anfangsdurchmesser des Zentrierabschnitts 11 ist dabei kleiner als der minimale Außendurchmesser des Wendelprofils 5 im Einlaufbereich 6. Im Anschluss an den Zentrierabschnitt 11 ist ein Gewindeabschnitt 14 mit einem Gewinde 15 angeordnet. Es kann sich dabei um ein metrisches oder auch ein anderes Gewinde handeln. Der Durchmesser des kegelstumpfförmigen Teils 13 des Zentrierabschnitts 11 wächst auf einen Wert an, der größer ist als der Wert des Außendurchmessers des Gewindes 15 des Gewindeabschnitts 14.

Fig. 1 zeigt eine Stellung des neuen Presspassverbindungselements 1 kurz vor dem Herstellen der gewünschten Presspassverbindung mit einem Bauteil 16. Bei dem Bauteil 16 kann es sich insbesondere um die Nabe eines PKW oder LKW handeln. In einem solchen Fall handelt es sich bei dem Presspassverbindungselement 1 demgemäss um einen Radbolzen 18. Das Bauteil 16 weist zum Herstellen der gewünschten Presspassverbindung eine Bohrung 19 auf, die sich als Durchgangsbohrung durch das Bauteil 16 erstreckt. Bei der Bohrung 19 handelt es sich vorzugsweise um eine lediglich durch Bohren - d. h. ohne nachfolgende weitere Bearbeitung - hergestellte Bohrung mit einer Toleranz von IT 10 bis IT 12. Vorzugsweise wird das Presspassverbindungselement 1 durch eine reine Axialkraft in die korrespondierende Bohrung 19 des Bauteils 16 eingepresst.

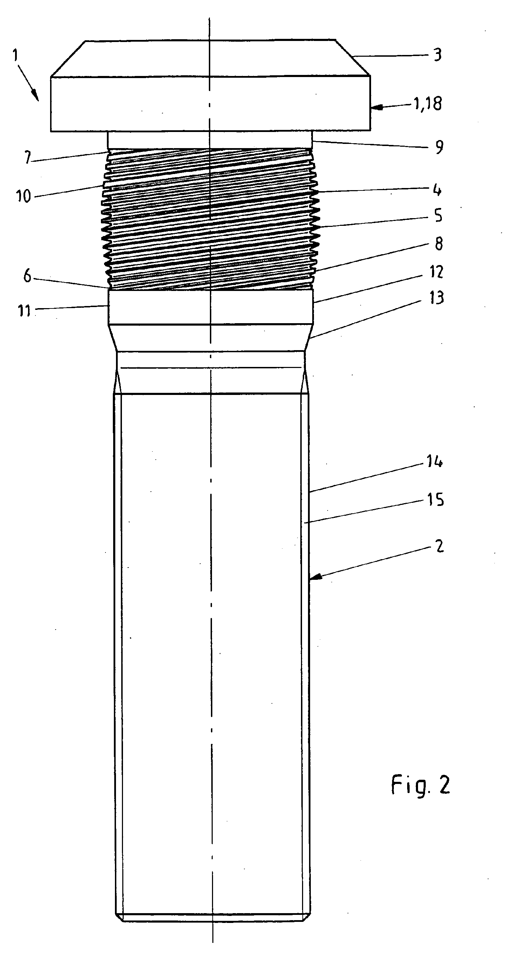

**Fig. 2** zeigt eine zweite Ausführungsform des erfindungsgemäßen Presspassverbindungselements 1, wobei bei dieser Ausführungsform lediglich der Kopf 3 eine etwas andere Gestaltung besitzt.

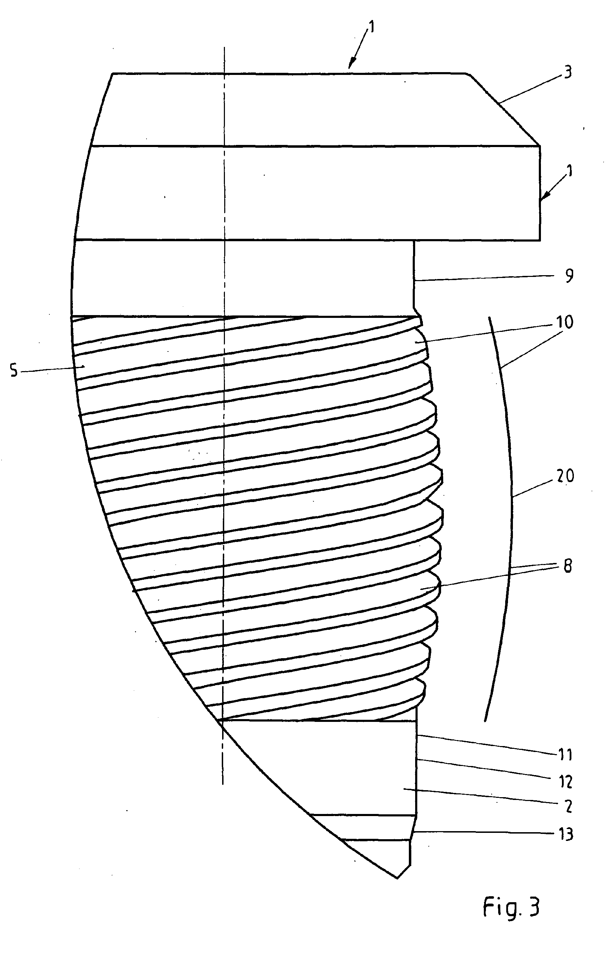

Details des Wendelprofils 5 gemäß Fig. 1 und 2 sind in **Fig. 3** dargestellt. In Fig. 3 ist insbesondere die (zeichnerisch übertriebene) tonnenförmige Ausbildung des Wendelprofils 5 des Presspassabschnitts 4 gut zu erkennen. Diese Ausbildung ist zusätzlich durch eine Linie 20 symbolisch dargestellt.

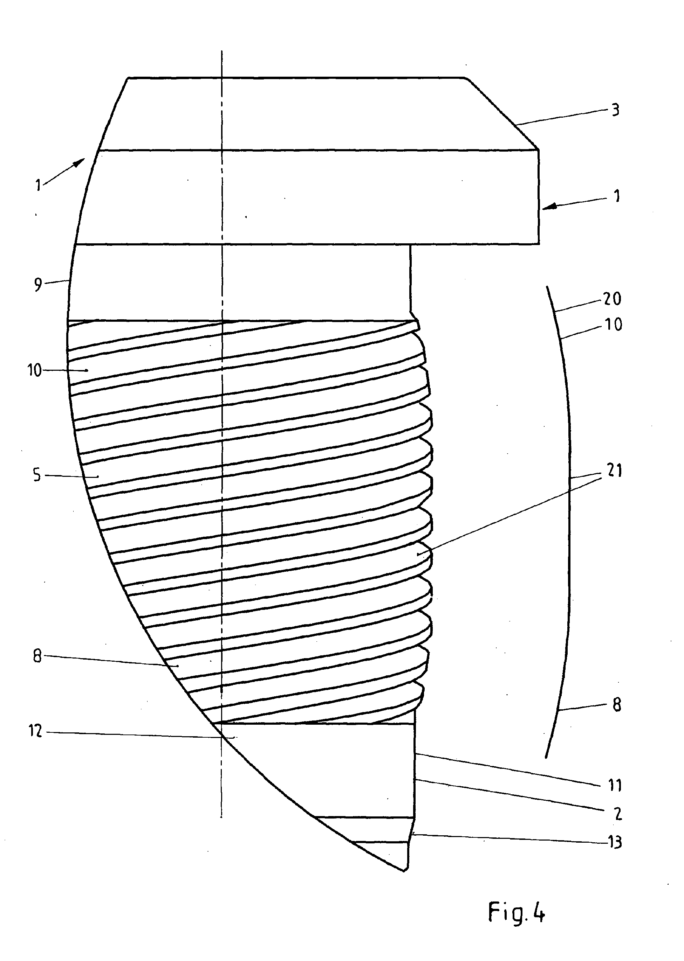

**Fig. 4** zeigt eine weitere Ausführungsform des Wendelprofils 5, wobei anhand der Linie 20 erkennbar ist, dass ein Anstiegsbereich 8, ein Abstiegsbereich 10 und ein zylindrischer Ergänzungsbereich 21 vorgesehen sind, wobei sich der zylindrische Ergänzungsbereich 21 zwischen den spiegelsymmetrisch verlaufenden Bereichen 8, 10 erstreckt. Der Übergang zwischen den Bereichen 8, 10 einerseits und 21 andererseits ist bei dieser Ausführungsform mit einem Radius versehen.

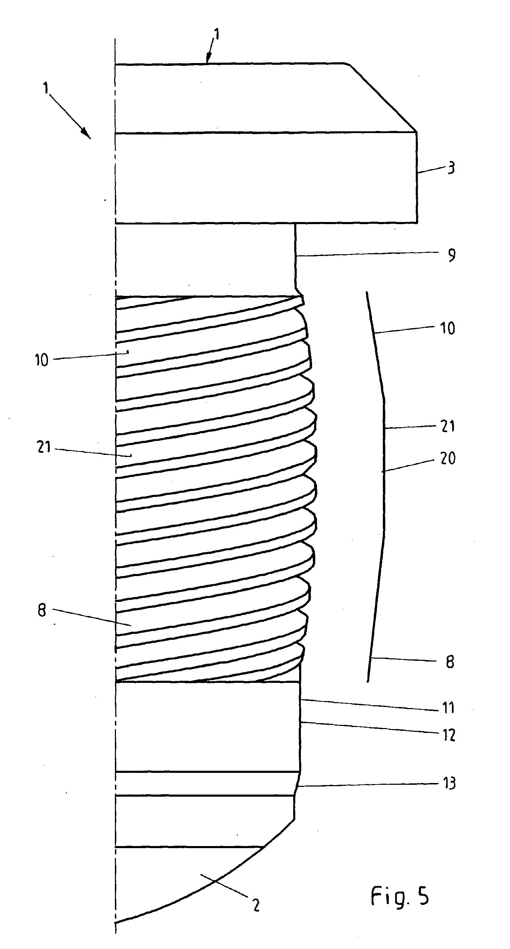

Gemäß **Fig. 5** kann das Wendelprofil 5 anstelle des zuvor beschriebenen Radius jedoch auch einen linearen bzw. spitzen Verlauf aufweisen.

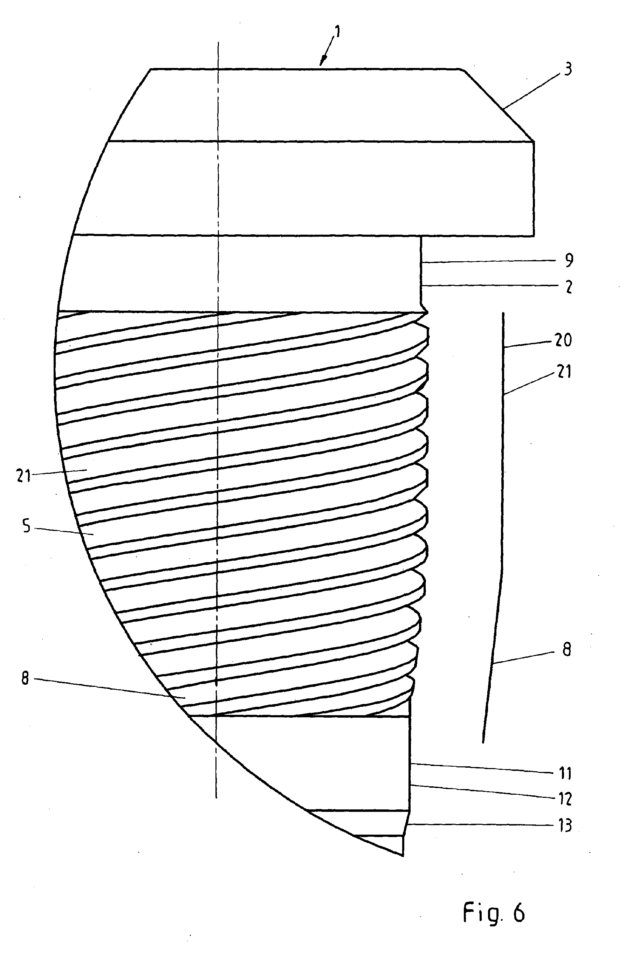

**Fig. 6** verdeutlicht, dass neben dem Anstiegsbereich 8 auch lediglich ein Ergänzungsbereich 21 vorgesehen sein kann - d. h., dass auf die Anordnung eines Abstiegsbereichs 10 verzichtet werden kann.

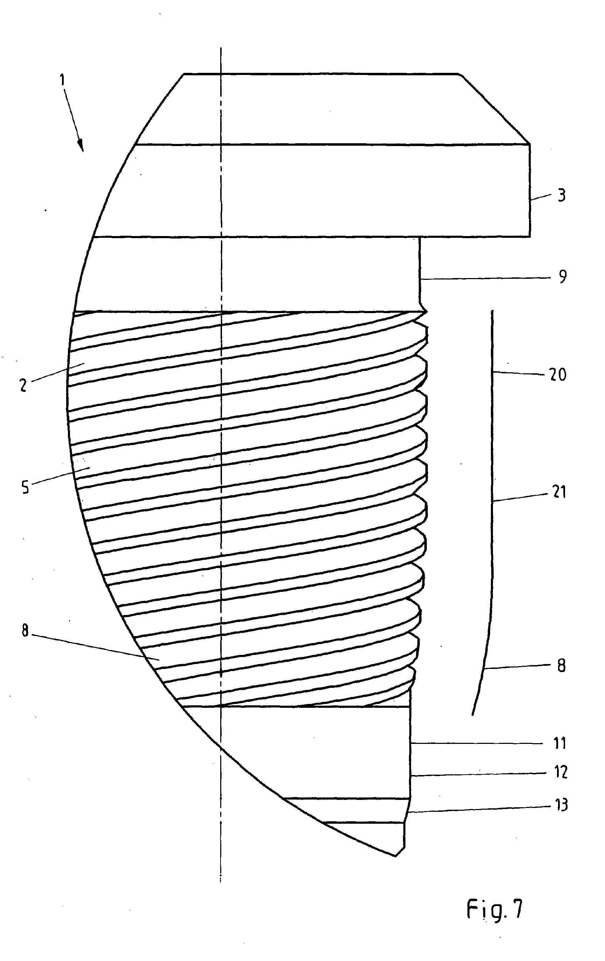

**Fig. 7** stellt eine ähnliche Ausführungsform wie Fig. 6 dar, wobei hierbei wiederum ein Radius Verwendung findet.

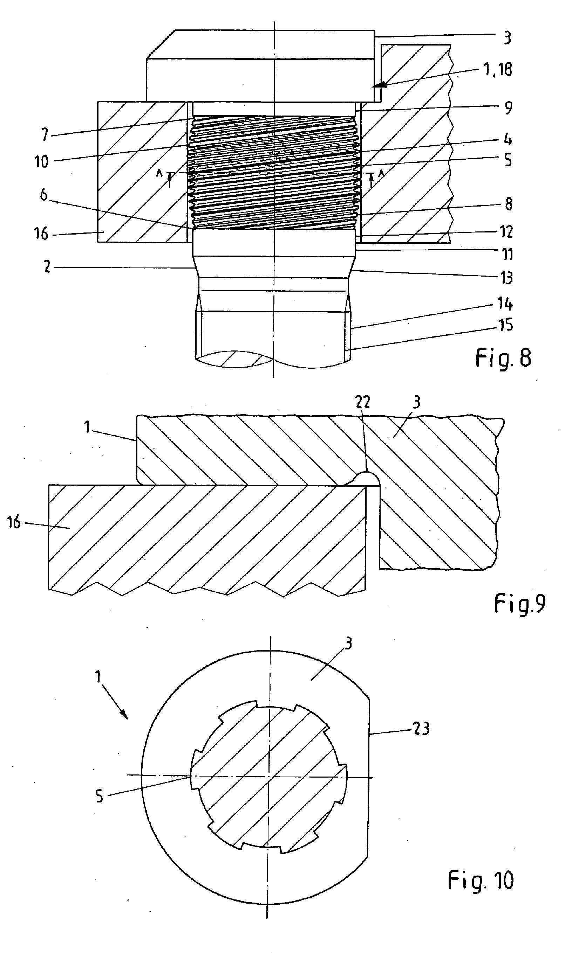

**Fig. 8** zeigt schließlich das Presspassverbindungselement 1 in seiner in dem Bauteil 16 montierten Stellung. Es ist erkennbar, dass zumindest im Bereich des maximalen Durchmessers des Presspassabschnitts 4 bzw. des Wendelprofils 5 eine derartige Überdeckung zwischen dem Außendurchmesser des Wendelprofils 5 und dem Innendurchmesser der Bohrung 19 vorliegt, dass eine sichere Presspassung vorliegt. Die Darstellungen des Anstiegsbereichs 9 und auch des Abstiegsbereichs 10 sind zum besseren Verständnis jedoch zeichnerisch stark übertrieben. In der Darstellung gemäß Fig. 8 ergibt sich an den Enden des Wendelprofils 5 eine Spielpassung. Das Wendelprofil 5 kann jedoch auch so ausgebildet sein, dass im gesamten Bereich des Wendelprofils 5 eine Presspassung vorliegt. Es versteht sich, dass jedoch auch in diesen Fällen das Maß der Überdeckung am Anfang des Anstiegsbereichs 8 geringer ist, so dass insgesamt beim Einpressen des neuen Presspassverbindungselements 1 in die Bohrung 19 geringere elastisch-plastische Verformungen auftreten als im Stand der Technik. Der Bereich der maximalen Überdeckung oder auch des maximalen Durchmessers ist jedoch groß genug gewählt, um die gewünschte sichere Presspassung bei allen Toleranzpaarungen zu erzielen.

**Fig. 9** zeigt einen Ausschnitt der Verbindungsstelle zwischen Kopf 3 des Presspassverbindungselements 1 und dem Bauteil 16. Durch eine an der Unterseite des Kopfes 3 vorgesehene umlaufende Nut 22 ist es möglich, auf die Anbringung einer Fase an dem Bauteil 16 zu verzichten. Die Nut 22 stellt sicher, dass der Kopf 3 mit seiner unteren Auflagefläche die obere Oberfläche des Bauteils 16 kontaktiert und keine zu großen Setzkraftverluste aufgrund von Graten oder dergleichen auftreten.

**Fig. 10** lässt die Ausbildung des Kopfes 3 mit einem Anschlag 23 erkennen. Der Anschlag 23 dient in der montierten Stellung zum Verhindern einer ungewünschten Rotation des Verbindungselements 1 in der Bohrung 19. Ebenfalls lässt Fig. 10 die sechsgängige Ausbildung des Wendelprofils 5 erkennen.

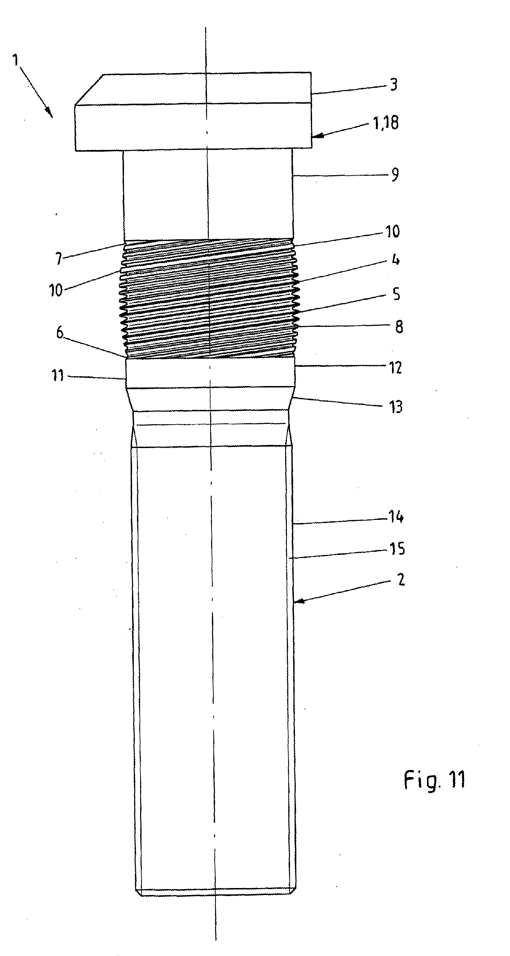

**Fig. 11** zeigt eine weitere Ausführungsform des Presspassverbindungselements, wobei hierbei der Presspassabschnitt 4 und das Wendelprofil 5 noch weiter beabstandet zum Kopf 3 angeordnet sind. Entsprechend besitzt der Abstandsbereich 9 eine größere axiale Erstreckung.

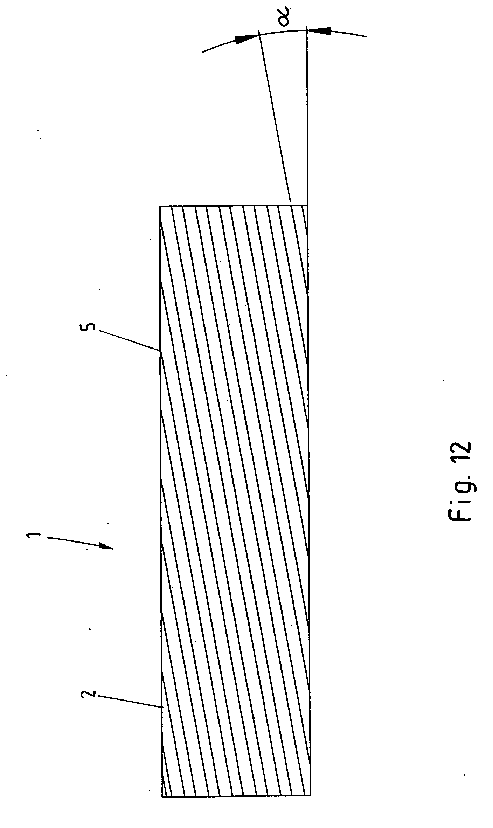

**Fig. 12** verdeutlicht den Steigungswinkel α des Wendelprofils 5. In der dargestellten sechsgängigen Ausführungsform und der weiteren Gestaltung des Wendelprofils 5 liegt der Steigungswinkel α in einem Bereich von 10°. Es können jedoch auch mehrgängige Wendelprofile mit niedrigeren oder höheren Gangzahlen verwendet werden, so dass der Steigungswinkel des Wendelprofils bevorzugt zwischen 5° und 30° beträgt.

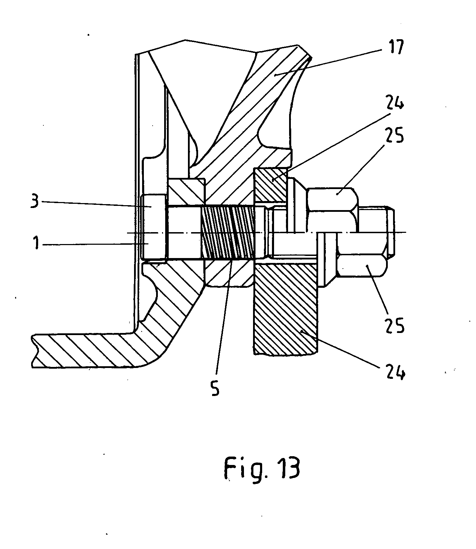

**Fig. 13** zeigt schließlich zwei konkrete Einbausituationen des neuen Presspassverbindungselements 1, wobei die erste Einbausituation oberhalb der Symmetrielinie und die zweite Einbausituation unterhalb der Symmetrielinie dargestellt ist. Das Presspassverbindungselements 1 ist in Form eines Radbolzens 18 ausgebildet und mit der Nabe 17 eines PKW oder LKW fest verbunden. Eine Felge 24 ist mittels des Presspassverbindungselements 1 und einer Mutter 25 an der Nabe 17 befestigt. Die oberhalb der Symmetrielinie dargestellte Felge 24 weist eine relativ große Wandstärke auf. Beispielsweise handelt es sich dabei um eine Aluminiumfelge. Die unterhalb der Symmetrielinie dargestellte Felge 24 weist eine relativ geringe Wandstärke auf. Beispielsweise handelt es sich dabei um eine Stahlfelge.

In der folgenden Tabelle sind die Werte einer beispielhaften Ausführungsform des neuen Presspassverbindungselement 1 angegeben.

| MAßTABELLE AUSFÜHRUNGSBEISPIEL PRESSPASSVERBINDUNGSELEMENT | | |
|---|---|---|
| | | |
| Außendurchmesser Gewinde | Ø d Gewinde | 21,85 mm |
| Flankendurchmesser Gewinde | Ø d _{2 Gewinde} | 20,92 mm |
| Kerndurchmesser Gewinde | Ø d ₃ Gewinde | 20,03 mm |
| Außendurchmesser Wendel max | Ø d _{Wendel kal max} | 22,57 mm |
| Außendurchmesser Wendel min | 0 d _{wendel kal min} | 22,52 mm |
| Flankendurchmesser Wendel | Ø d _{2 Wendel} | 22,30 mm |
| Kerndurchmesser Wendel | Ø d _{3 Wendel} | 21,79 mm |
| Länge Wendel | I _{Wendel} | 15 mm |
| Länge Zentrierbereich | I _{Zentrierbereich} | 6 mm |
| Steigungswinkel Wendel | α _{Wendel} | 9,7° |

### BEZUGSZEICHENLISTE

- 1: Presspassverbindungselement
- 2: Schaft
- 3: Kopf
- 4: Presspassabschnitt
- 5: Wendelprofil
- 6: Einlaufbereich
- 7: Auslaufbereich
- 8: Anstiegsbereich
- 9: Abstandsbereich
- 10: Abstiegsbereich
- 11: Zentrierabschnitt
- 12: zylindrischer Teil
- 13: kegelstumpfförmiger Teil
- 14: Gewindeabschnitt
- 15: Gewinde
- 16: Bauteil
- 17: Nabe
- 18: Radbolzen
- 19: Bohrung
- 20: Linie
- 21: Ergänzungsbereich
- 22: Nut
- 23: Anschlag
- 24: Felge
- 25: Mutter

## Patentansprüche

1. Presspassverbindungselement, mit
einem Schaft (2),
einem an den Schaft (2) anschließenden Kopf (3), und
einem an dem Schaft (2) vorgesehenen Presspassabschnitt (4) mit einem mehrgängigen Wendelprofil (5) mit einem Einlaufbereich (6), **dadurch gekennzeichnet, dass** der Presspassabschnitt (4) zusätzlich zu dem Einlaufbereich (6) einen Anstiegsbereich (8) besitzt, in dem der Außendurchmesser des Presspassabschnitts (4) in Richtung auf den Kopf (3) hin bis zu einem maximalen Außendurchmesser ansteigt, und dass der maximale Außendurchmesser des Anstiegsbereichs (8) des Presspassabschnitts (4) beabstandet zu dem Kopf (3) angeordnet ist.

2. Presspassverbindungselement nach Anspruch 1, **dadurch gekennzeichnet, dass** der Presspassabschnitt (4) zusätzlich zu dem Anstiegsbereich (8) einen Abstiegsbereich (10) besitzt, in dem der Außendurchmesser des Presspassabschnitts (4) in Richtung auf den Kopf (3) hin sinkt.

3. Presspassverbindungselement nach Anspruch 2, **dadurch gekennzeichnet, dass** der Presspassabschnitt (4) eine tonnenförmige Gestalt besitzt.

4. Presspassverbindungselement nach Anspruch 1 oder 2, **dadurch gekennzeichnet, dass** im Anschluss an den Anstiegsbereich (8) in Richtung auf den Kopf (3) ein zylindrischer Ergänzungsbereich (21) vorgesehen ist, der den maximalen Außendurchmesser aufweist.

5. Presspassverbindungselement nach Anspruch 4, **dadurch gekennzeichnet, dass** der zylindrische Ergänzungsbereich (21) zwischen dem Anstiegsbereich (8) und dem Abstiegsbereich (19) des Presspassabschnitts (4) vorgesehen ist.

6. Presspassverbindungselement nach mindestens einem der Ansprüche 1 bis 5, **dadurch gekennzeichnet, dass** das Wendelprofil (5) mindestens sechsgängig ausgebildet ist.

7. Presspassverbindungselement nach mindestens einem der Ansprüche 1 bis 6, **dadurch gekennzeichnet, dass** der Steigungswinkel des Wendelprofils (5) zwischen 5° und 30° beträgt.

8. Presspassverbindungselement nach mindestens einem der Ansprüche 1 bis 7, **dadurch gekennzeichnet, dass** das an dem dem Kopf (3) abgewandten Ende des Schaftes (2) ein Gewindeabschnitt (14) mit einem Gewinde (15) mit einem Flankendurchmesser vorgesehen ist, und dass das Wendelprofil (5) einen Kerndurchmesser besitzt, der größer oder gleich dem Flankendurchmesser des Gewindes (15) ist.

9. Presspassverbindungselement nach mindestens einem der Ansprüche 1 bis 8, **dadurch gekennzeichnet, dass** an dem dem Kopf abgewandten Ende des Schaftes (2) ein Gewindeabschnitt (14) mit einem Gewinde (15) und an dem dem Kopf (3) abgewandten Ende des Presspassabschnitts (4) und anschließend an den Einlaufbereich (6) des Wendelprofils (5) ein Zentrierabschnitt (11) vorgesehen ist, dessen Außendurchmesser größer als der Außendurchmesser des Gewindes (15) und kleiner als der minimale Außendurchmesser des Wendelprofils (5) im Einlaufbereich (6) ist.

10. Presspassverbindungselement nach mindestens einem der Ansprüche 1 bis 9, **dadurch gekennzeichnet, dass** der Zentrierabschnitt (11) eine axiale Länge besitzt, die zwischen 10 % und 50 %, vorzugsweise 25 %, des maximalen Außendurchmessers des Presspassabschnitts (4) entspricht.

11. Presspassverbindungselement nach mindestens einem der Ansprüche 1 bis 10, **dadurch gekennzeichnet, dass** das Presspassverbindungselement (1) ein Radbolzen (18) ist.

12. Verfahren zum Herstellen eines Presspassverbindungselements mit einem Schaft und einem Kopf, mit den Schritten
Kaltumformen eines am Schaft des Presspassverbindungselements vorgesehenen Presspassabschnitts zum Erzeugen eines zylindrischen, mehrgängigen Wendelprofils, **gekennzeichnet durch**,
spanloses Kalibrieren des Wendelprofils zum Erzeugen eines Anstiegsbereichs, in dem der Außendurchmesser des Presspassabschnitts in Richtung auf den Kopf hin bis zu einem maximalen Außendurchmesser derart ansteigt, dass der maximale Außendurchmesser des Anstiegsbereichs des Presspassabschnitts beabstandet zu dem Kopf angeordnet ist.

13. Verfahren nach Anspruche 12, **dadurch gekennzeichnet, dass** das spanlose Kalibrieren durch Walzen oder durch Schäften erfolgt.
